# EUROPÄISCHE PATENTANMELDUNG

(11) **EP 2 428 499 A1**
(43) Veröffentlichungstag der Anmeldung: **14.03.2012**
(21) Anmeldenummer: 10176340.7
(22) Anmeldetag: 13.09.2010
(51) Int. Cl.: C04B 28/02

(54) **Verwendung von aluminium- und siliziumhaltigen Verbindungen zur Herstellung eines hydrophilen Baustofferzeugnisses**

(71) Anmelder: Construction Research & Technology GmbH, 83308 Trostberg (DE)
(72) Erfinder: Gehrig, Uwe, 83368 St. Georgen (DE); Ellenrieder, Florian, 86152, Augsburg (DE); Melchart, Michael, 83278, Traunstein (DE); Riedmiller, Joachim, 86316, Friedberg (DE); Wache, Steffen, 83254, Breitbrunn (DE); Degenkolb, Mathias, 67434, Neustadt (DE); Kutschera, Michael, 67434, Neustadt (DE); Voland, Katja, 12163, Berlin (DE)

(57) **Zusammenfassung**

Vorgeschlagen wird die Verwendung eines Bindemittelsystems, umfassend aluminium-und siliziumoxidhaltige Verbindungen, zur Herstellung eines hydrophilen Baustofferzeugnisses, dadurch gekennzeichnet, dass die Summe der als Al₂O₃ und SiO₂ berechneten Oxide im Bindemittelsystem ≥ 40 Gew.-%, bezogen auf das wasserfreie Bindemittelsystem, beträgt und der Kontaktwinkel eines auf die Oberfläche des ausgehärteten Baustofferzeugnisses aufgesetzten Öltropfens ≥ 90° beträgt, wobei die Kontaktwinkelbestimmung unter Wasser erfolgt. Die besagte Hydrophilie bewirkt eine leichte Reinigbarkeit des Baustofferzeugnisses, wobei oft ein einfaches Abspülen mit Wasser ausreichend ist.

## Beschreibung

Die vorliegende Erfindung betrifft die Verwendung eines Bindemittelsystems, umfassend aluminium- und siliziumoxidhaltige Verbindungen, zur Herstellung eines hydrophilen Baustofferzeugnisses sowie das so erhältliche, hydrophile Baustofferzeugnis.

Bindemittel und Baustofferzeugnisse der eingangs beschriebenen Art sind bereits in unserer älteren, nicht veröffentlichten, prioritätsbegründenden Patentanmeldung EP 10161010 vom 26.04.2010 beschrieben. Allerdings ist dort nach dem Aushärten ein Gehalt von mindestens 25 Gew.-% Glasperlen, bezogen auf die Gesamtmasse, erforderlich, was in der vorliegenden Anmeldung nicht der Fall ist.

Allgemein ist die Reinigbarkeit von Baustofferzeugnissen, die mit anorganischen Bindemitteln hergestellt sind, von großer Wichtigkeit. Insbesondere organische Verschmutzungen führen auf den Oberflächen solcher Baustofferzeugnisse zu sichtbaren, schwer entfernbaren Flecken.

Portlandzement ist ein bekanntes anorganisches Bindemittel. Er wurde erstmals im Britischen Patent BP 5022 erwähnt und wurde seither ständig weiterentwickelt. Moderner Portlandzement enthält ca. 70 Gew.-% CaO + MgO, ca. 20 Gew.-% SiO₂ und ca. 10 Gew.-% Al₂O₃ + Fe₂O₃. Durch seinen hohen CaO-Anteil härtet er hydraulisch. Ausgehärteter Portlandzement weist eine ausgeprägte Rauheit auf und ist schwer zu reinigen.

Bestimmte Schlacken aus metallurgischen Verfahren können als latent hydraulische Bindemittel als Zumischungen zu Portlandzementen verwendet werden. Auch ist eine Aktivierung mit starken Alkalien wie z.B. Alkalimetallhydroxiden, Alkalimetallcarbonaten oder Wassergläsern möglich. Sie können durch Abmischung mit Füllstoffen (wie z.B. Quarzsand mit entsprechender Körnung) und Additiven als Mörtel oder Betone zur Anwendung kommen. Beispielsweise ist Hochofenschlacke ein typisches latent hydraulisches Bindemittel. Die ausgehärteten Produkte weisen im Allgemeinen die Eigenschaften von hydraulisch ausgehärteten Systemen auf.

Anorganische Bindemittelsysteme, basierend auf reaktionsfähigen Verbindungen auf der Basis von SiO₂ in Verbindung mit Al₂O₃, die in wässrig alkalischem Medium aushärten, sind ebenfalls allgemein bekannt. Solche ausgehärteten Bindemittelsysteme werden auch "Geopolymere" genannt und sind z.B. in EP 1236702 A1, EP 1081114 A1, WO 85/03699, WO 08/012438, US 4,349,386 und US 4,472,199 beschrieben. Im Vergleich zu Zementen können Geopolymere kostengünstiger und beständiger sein und eine günstigere CO₂-Emissions-Bilanz aufweisen. Als reaktionsfähiges Oxidgemisch können dabei Metakaolin, Schlacken, Flugaschen, aktivierter Ton oder Mischungen daraus eingesetzt werden. Das alkalische Medium zur Aktivierung des Bindemittels besteht üblicherweise aus wässrigen Lösungen von Alkalikarbonaten, Alkalifluoriden, Alkalihydroxiden und/oder Wasserglas. Im Allgemeinen ist eine Geopolymer-Oberfläche weniger porös als eine Zementoberfläche.

EP 1236702 A1 beschreibt eine Wasserglas enthaltende Baustoffmischung für die Herstellung von chemikalienbeständigen Mörteln auf Basis eines latent hydraulischen Bindemittels, Wasserglas sowie eines Metallsalzes aus der Gruppe "Metallhydroxid, Metalloxid, kohlenstoffhaltiges Metallsalz, schwefelhaltiges Metallsalz, stickstoffhaltiges Metallsalz, phosphorhaltiges Metallsalz, halogenhaltiges Metallsalz" als Steuerungsmittel. Als latent hydraulischer Bestandteil kann dabei auch Hüttensand eingesetzt werden. Als Metallsalz werden Alkalisalze, insbesondere Lithiumsalze genannt und eingesetzt.

EP 1081114 A1 beschreibt eine Baustoffmischung für die Herstellung von chemikalienbeständigen Mörteln, wobei die Baustoffmischung Wasserglaspulver und zumindest einen Wasserglashärter enthält. Fernerhin sind über 10 Gew.-% zumindest eines latent hydraulischen Bindemittels enthalten, und die Baustoffmischung weist zumindest einen anorganischen Füllstoff auf.

In unserer älteren, nicht veröffentlichten, prioritätsbegründenden Patentanmeldung EP 09177153 vom 26.11.2009 sind Systeme beschrieben, in denen das Bindemittel in Form einer Hybrid-Matrix aushärtet, die früh säurebeständig, wasserbeständig und laugenbeständig ist. In dieser älteren Patentanmeldung ist die erfindungsgemäße Verwendung gemäß der hier vorliegenden Anmeldung indessen nicht beschrieben.

Um schmutzanfällige Oberflächen von Baustofferzeugnissen gegen äußere Einflüsse zu schützen, können diese sowohl durch hydrophobe als auch durch hydrophile Beschichtungen vergütet werden.

Zur Entfernung von Farbverschmutzungen an Fassaden wurden zum Beispiel Antigraffitisysteme entwickelt, die durch Hydrophobierung der Oberfläche die Haftung von Graffitifarben mindern. Beschrieben sind solche Beschichtungen unter anderem in WO 92/21729, WO 97/24407 und DE 19955047. Nachteilig bei diesen Systemen ist die oftmals schlechte Haftung zum Substrat, die geringe Transparenz, der hohe Preis sowie eine unzureichende Härte.

In US 2008/0250978 ist eine hydrophobe, selbstreinigende Beschichtung beschrieben, welche durch Einbringung von hydrophobierten Nanopartikeln (z.B. Mikrosilika oder Zinkoxid) erreicht wird. Die Wirksamkeit der Beschichtung kann allenfalls über mehrere Wochen nachgewiesen werden.

Ein Verfahren zum Aufbringen eines Auftrags auf die Oberfläche eines Erzeugnisses aus Beton oder Mörtel zur Verbesserung der Hafteigenschaften ist in DE 3018826 dargestellt. Durch eine Abmischungen von Polyvinylalkohol und Borsäure in wässriger Lösung, die durch die Alkalinität des Substrats geliert, wird eine Erhöhung der Hydrophilie erreicht.

Weitere hydrophile Beschichtungen und Beschichtungsmethoden finden sich in CN 101440168, EP 2080740 und US 4,052,347. Alle diese Beschichtungen haben gemein, dass organische Additive verwendet werden.

Auch die Verwendung von Titandioxid (z.B. Rutil oder Anatas) in Baustofferzeugnissen bzw. Beschichtungszusammensetzungen ist bekannt. Titandioxid wirkt bei UV-Bestrahlung (bei entsprechender Dotierung auch bei Bestrahlung mit sichtbarem Licht) photokatalytisch, d.h. es zersetzt organische Verschmutzungen oxidativ. Auch lässt sich die Hydrophilie der Oberflächen durch die Verwendung von Titandioxid steigern. Titandioxid kann prinzipiell in der Masse des Baustofferzeugnisses oder als Bestandteil einer Beschichtungszusammensetzung verwendet werden.

Beispielsweise beschreibt WO 08/079756 A1 eine Beschichtungszusammensetzung und einen beschichteten Gegenstand, wobei die Beschichtungszusammensetzung photokatalytische Teilchen (z.B. TiO₂) und ein Alkalisilikat-Bindemittel, weiterhin umfassend Borsäure, Borate sowie Mischungen davon, umfasst. EP 2080740 A1 beschreibt eine hydrophile Beschichtung umfassend Titandioxid und eine Ether/Oleat-basierte organische Verbindung.

Die Verwendung von Titandioxid (und besonders bei Einsatz in der Masse des Baustofferzeugnisses) ist allerdings kostspielig. Zudem ist man bei der photokatalytischen Selbstreinigung auf das Vorhandensein von UV-Strahlung angewiesen. Die photokatalytische Selbstreinigung ist daher z.B. im Innen- bzw. Sanitärbereich ohne zusätzliche Maßnahmen nicht anwendbar.

Die Erfinder haben sich die Aufgabe gestellt, zumindest einige der Nachteile des oben diskutierten Standes der Technik im Wesentlichen zu vermeiden. Insbesondere sollte eine preisgünstige Alternative zu den oben genannten Beschichtungen gefunden werden, die eine leichte Reinigbarkeit der Baustofferzeugnisse ermöglicht. Die Ablösbarkeit der wirksamen Bestandteile von der Oberfläche des Baustofferzeugnisses sowie die Notwendigkeit eines gesonderten Arbeitsgangs zur Oberflächenvergütung sollten vermieden werden.

Die genannten Aufgaben werden mit den Merkmalen des unabhängigen Anspruchs gelöst. Die abhängigen Ansprüche betreffen bevorzugte Ausführungsformen.

Es wurde überraschend gefunden, dass aluminium- und siliziumoxidhaltige Verbindungen unter bestimmten Mischungsverhältnissen hydrophile Eigenschaften im ausgehärteten Baustofferzeugnis ergeben. Besonders vorteilhaft ist dabei, dass es sich nicht um einen reinen Oberflächeneffekt handelt, sondern das komplette Material des Baustofferzeugnisses diese Eigenschaften aufweist.

Gegenstand der vorliegenden Erfindung ist die Verwendung eines Bindemittelsystems, umfassend aluminium- und siliziumoxidhaltige Verbindungen, zur Herstellung eines hydrophilen Baustofferzeugnisses, dadurch gekennzeichnet, dass die Summe der als Al₂O₃ und SiO₂ berechneten Oxide im Bindemittelsystem ≥ 40 Gew.-%, bezogen auf das wasserfreie Bindemittelsystem, beträgt und der Kontaktwinkel eines auf die Oberfläche des ausgehärteten Baustofferzeugnisses aufgesetzten Öltropfens ≥ 90° beträgt, wobei die Kontaktwinkelbestimmung unter Wasser erfolgt.

Im Sinne der vorliegenden Erfindung sollen unter "aluminium- und siliziumoxidhaltigen Verbindungen" Verbindungen verstanden werden, die Aluminium, Silizium und Sauerstoff umfassen. Es ist bei quantitativen Analysen allgemein üblich, die Aluminium- und Siliziumgehalte als Al₂O₃ und SiO₂ anzugeben, ohne dass Aluminium und Silizium tatsächlich als Oxide vorliegen müssen. Erfindungsgemäß sollen beispielsweise auch Silikate, Aluminate, Alumosilikate, Mischoxide (z.B. Al₂Si₂O₇), Zemente, SiO₂ zusammen mit einer Aluminiumquelle oder Al₂O₃ zusammen mit einer Siliziumquelle u.a. als umfasst gelten.

Das "Bindemittelsystem" umfasst erfindungsgemäß aluminium- und siliziumoxidhaltige Verbindungen. Bevorzugte Bestandteile des Bindemittelsystems werden weiter unten diskutiert. Die Berechnung der erfindungsgemäßen Oxidgehalte erfolgt in Gewichtsprozent (Gew.-%) auf der Basis des "wasserfreien Bindemittelsystems", d.h. Wasser wird erfindungsgemäß nicht als Bestandteil des Bindemittelsystems angesehen und gerechnet.

Sobald das Bindemittelsystem mit Wasser in Berührung kommt, erfolgt ein Abbinden und Aushärten des Bindemittelsystems. Das Wasser wird entweder vom Bindemittel getrennt vorgehalten und im Bedarfsfall zugesetzt (einkomponentige Formulierung) oder zusammen mit einem alkalischen Aktivator vorgehalten und im Bedarfsfall zugesetzt (zweikomponentige Formulierung). Man erhält so das erfindungsgemäße, hydrophile Baustofferzeugnis. Bevorzugte Baustoffrezepturen und Baustofferzeugnisse werden weiter unten erwähnt. Um als "ausgehärtetes Baustofferzeugnis" im Sinne der vorliegenden Erfindung angesehen zu werden, muss das Abbinden und Aushärten des Bindemittelsystems zumindest so weit fortgeschritten sein, dass es bei der Zugabe eines Überschusses an Wasser nicht wieder zerfällt. Zweckmäßig wurde ein ausgehärtetes Baustofferzeugnis zumindest einen Tag, vorzugsweise zumindest drei Tage, besonders bevorzugt zumindest 7 Tage und insbesondere zumindest 28 Tage aushärten lassen. Die Aushärtung erfolgt zweckmäßig bei Raumtemperatur. Erfindungsgemäß soll aber generell eine Aushärtung zwischen 0 °C und 500 °C als umfasst gelten.

Die Hydrophilie des "hydrophilen Baustofferzeugnisses" wird über den Kontaktwinkel eines auf die Oberfläche des ausgehärteten Baustofferzeugnisses aufgesetzten Öltropfens definiert. Im Falle einer Porosität des Baustofferzeugnisses würde ein Öltropfen zumindest teilweise von der Oberfläche des Baustofferzeugnisses aufgesaugt werden, so dass eine dynamische Kontaktwinkelbestimmung erforderlich ist. Im vorliegenden Fall erfolgt die dynamische Kontaktwinkelbestimmung mittels eines proprietären, im Beispielteil ausführlich beschriebenen Messverfahrens unter Wasser.

Eine Messung des Kontaktwinkels unter Wasser ist auch auf Grund der Tatsache sinnvoll, dass sich bei den erfindungsgemäß besonders bevorzugten Systemen Öltropfen alleine durch die Zugabe von Wasser wieder von der Oberfläche des hydrophilen Baustofferzeugnisses ablösen. Im Sinne der vorliegenden Erfindung soll unter "hydrophil" ein Kontaktwinkel von ≥ 90° verstanden werden. Bei Kontaktwinkeln von ≥ 135° kann auch von "Superhydrophilie" gesprochen werden. Besonders bevorzugt sind Systeme, bei denen sich der Öltropfen nach kurzer Zeit der Wassereinwirkung wieder ablöst. In diesem Fall wird der Kontaktwinkel als 180° angesehen.

Ein höherer Gehalt der besagten Oxide im Bindemittelsystem kann von Vorteil sein, da hierdurch die Hydrophilie des ausgehärteten Baustofferzeugnisses steigt. Vorzugsweise beträgt die Summe der als Al₂O₃ und SiO₂ berechneten Oxide im Bindemittelsystem ≥ 50 Gew.-%, besonders bevorzugt ≥ 60 Gew.-%, bezogen auf das wasserfreie Bindemittelsystem.

Eine höhere Hydrophilie bewirkt einen höheren Kontaktwinkel. Es hat sich als besonders vorteilhaft herausgestellt, wenn der Kontaktwinkel ≥ 100°, vorzugsweise ≥ 120° und insbesondere ≥ 135° (Superhydrophilie) ist.

Ein gewisser Gehalt an SiO₂ ist vorteilhaft, um einen hohen Kontaktwinkel zu erreichen. Der Gehalt der als SiO₂ berechneten Oxide im Bindemittelsystem sollte bevorzeugt ≥ 15 Gew.-%, besonders bevorzugt ≥ 25 Gew.-% und insbesondere ≥ 35 Gew.-%, bezogen auf das wasserfreie Bindemittelsystem, betragen.

Erfindungsgemäß ist kein Titandioxid erforderlich, um die Wirkung der hohen Hydrophilie und die damit verbundene leichte Reinigbarkeit der Oberflächen ("Easy to Clean"-Effekt) zu erreichen. Allerdings kann das Bindemittelsystem optional auch titanoxidhaltige und/oder zirkonoxidhaltige Verbindungen enthalten, d.h. Verbindungen, die Titan und/oder Zirkonium sowie Sauerstoff umfassen. Die Summe der als Al₂O₃, SiO₂, TiO₂ und ZrO₂ berechneten Oxide im Bindemittelsystem beträgt dann vorzugsweise ≥ 41 Gew.-%, besonders bevorzugt ≥ 50 Gew.-% und insbesondere ≥ 60 Gew.-%, bezogen auf das wasserfreie Bindemittelsystem.

Der Gehalt an CaO sollte weit unter den für zementäre Systeme üblichen Gehalten liegen. Reiner Portlandzement weist ca. 60 Gew.-% CaO auf. Zum einen wäre es dann rechnerisch kaum noch möglich, den eingangs geforderten Gehalt an Al₂O₃ und SiO₂ von ≥ 40 Gew.-% zu erreichen, zum anderen scheint ein hoher CaO-Gehalt erfindungsgemäß nicht besonders wirksam zu sein. Vorzugsweise beträgt der Gehalt der als CaO berechneten Oxide im Bindemittelsystem ≤ 35 Gew.-%, weiter bevorzugt ≤ 30 Gew.-%, besonders bevorzugt 8 bis 28 Gew.-% und insbesondere 12 bis 25 Gew.-%, bezogen auf das wasserfreie Bindemittelsystem.

Es hat sich gezeigt, dass vor allem die Oxidzusammensetzung für die erfindungsgemäße Wirkung der hohen Hydrophilie und der leichten Reinigbarkeit verantwortlich ist. Zweckmäßig wird diese Oxidzusammensetzung dadurch erreicht, dass das Bindemittelsystem hydraulische, latent hydraulische und/oder puzzolanische Bindemittel sowie Alkalisilikat umfasst.

Das hydraulische Bindemittel ist beispielsweise aus Portlandzementen, Aluminatzementen sowie Mischungen davon ausgewählt, wobei der Gehalt des Bindemittelsystems an Portlandzementen und/oder Aluminatzementen vorzugsweise ≤ 30 Gew.-%, besonders bevorzugt ≤ 20 Gew.-% und insbesondere ≤ 10 Gew.-%, bezogen auf das wasserfreie Bindemittelsystem, betragen sollte. Wie weiter unten im experimentellen Teil gezeigt wird, weisen aus reinem Portlandzement bzw. Aluminatzement (Tonerdezement) hergestellte Baustofferzeugnisse sehr kleine Kontaktwinkel auf.

Wie oben ausgeführt wurde, enthält Portlandzement ca. 70 Gew.-% CaO + MgO, ca. 20 Gew.-% SiO₂ und ca. 10 Gew.-% Al₂O₃ + Fe₂O₃. Aluminatzement bzw. Tonerdezement ("High Alumina Cement") enthält ca. 20 bis 40 Gew.-% CaO, bis zu etwa 5 Gew.-% SiO₂, ca. 40 bis 80 Gew.-% Al₂O₃ und bis zu etwa 20 Gew.-% Fe₂O₃. Diese Zementsorten sind im Stand der Technik wohlbekannt.

Das latent hydraulische Bindemittel ist beispielsweise aus Schlacken, insbesondere aus Hochofenschlacke, Hüttensand, Hüttensandmehl, elektrothermischer Phosphorschlacke, Edelstahlschlacke sowie Mischungen davon ausgewählt. Bei diesen Schlacken kann es sich sowohl um industrielle Schlacken, d.h. Abfallprodukte aus industriellen Prozessen, als auch um synthetisch nachgestellte Schlacken handeln. Letzteres ist vorteilhaft, da industrielle Schlacken nicht immer in gleichbleibender Menge und Qualität verfügbar sind.

Im Sinne der vorliegenden Erfindung soll unter einem latent hydraulischen Bindemittel vorzugsweise ein Bindemittel verstanden werden, bei dem das molare Verhältnis von (CaO + MgO):SiO₂ zwischen 0,8 und 2,5 und besonders bevorzugt zwischen 1,0 und 2,0 liegt.

Hochofenschlacke ist ein Abfallprodukt des Hochofenprozesses. Hüttensand ist granulierte Hochofenschlacke und Hüttensandmehl fein pulverisierter Hüttensand. Das Hüttensandmehl variiert je nach Herkunft und Aufbereitungsform in seiner Mahlfeinheit und Korngrößenverteilung, wobei die Mahlfeinheit Einfluss auf die Reaktivität hat. Als Kenngröße für die Mahlfeinheit wird der sogenannte Blainewert herangezogen, welcher typischerweise in der Größenordnung von 200 bis 1000, vorzugsweise zwischen 300 und 500 m² kg⁻¹ liegt. Je feiner die Vermahlung ist, desto höher ist die Reaktivität. Hochofenschlacke weist in der Regel 30 bis 45 Gew.-% CaO, ca. 4 bis 17 Gew.-% MgO, ca. 30 bis 45 Gew.-% SiO₂ und ca. 5 bis 15 Gew.-% Al₂O₃ auf, typischerweise ca. 40 Gew.-% CaO, ca. 10 Gew.-% MgO, ca. 35 Gew.-% SiO₂ und ca. 12 Gew.-% Al₂O₃.

Elektrothermische Phosphorschlacke ist ein Abfallprodukt der elektrothermischen Phosphorherstellung. Sie ist weniger reaktiv als Hochofenschlacke und enthält ca. 45 bis 50 Gew.-% CaO, ca. 0,5 bis 3 Gew.-% MgO, ca. 38 bis 43 Gew.-% SiO₂, ca. 2 bis 5 Gew.-% Al₂O₃ und ca. 0,2 bis 3 Gew.-% Fe₂O₃ sowie Fluorid und Phosphat. Edelstahlschlacke ist ein Abfallprodukt verschiedener Stahlerzeugungsverfahren mit stark variierender Zusammensetzung (siehe Caijun Shi, Pavel V. Krivenko, Della Roy, Alkali-Activated Cements and Concretes, Taylor & Francis, London & New York, 2006, S. 42-51).

Das puzzolanische Bindemittel ist beispielsweise aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen sowie Mischungen davon ausgewählt. Eine Übersicht erfindungsgemäß geeigneter puzzolanischer Bindemittel findet sich z.B. bei Caijun Shi, Pavel V. Krivenko, Della Roy, Alkali-Activated Cements and Concretes, Taylor & Francis, London & New York, 2006, S.51-63. Die Prüfung auf Puzzolanaktivität kann nach DIN EN 196 Teil 5 erfolgen.

Amorphe Kieselsäure ist umso reaktiver, je kleiner die Teilchendurchmesser sind. Bei der amorphen Kieselsäure handelt es sich vorzugsweise um eine röntgenamorphe Kieselsäure, d.h. um eine Kieselsäure, die im Pulverdiffraktionsverfahren keine Kristallinität zeigt. Im Sinne der vorliegenden Erfindung soll Glasmehl ebenfalls als amorphe Kieselsäure betrachtet werden soll.

Die erfindungsgemäße amorphe Kieselsäure weist zweckmäßig einen Gehalt von mindestens 80 Gew.-%, vorzugsweise mindestens 90 Gew.-% SiO₂ auf. Fällungskieselsäure wird großtechnisch über Fällungsprozesse ausgehend von Wasserglas gewonnen. Fällungskieselsäure wird je nach Herstellungsverfahren auch Kieselgel genannt. Pyrogene Kieselsäure wird durch Umsetzung von Chlorsilanen wie z.B. Siliciumtetrachlorid in der Knallgasflamme erzeugt. Pyrogene Kieselsäure ist ein amorphes SiO₂-Pulver von 5 bis 50 nm Teilchendurchmesser und einer spezifischen Oberfläche von 50 bis 600 m² g⁻¹.

Mikrosilika ist ein Nebenprodukt der Silicium-, Ferrosilicium- oder Zirkoniumherstellung und besteht ebenfalls größtenteils aus amorphem SiO₂-Pulver. Die Teilchen haben Durchmesser in der Größenordnung von 0,1 µm bis 1,0 µm. Die spezifische Oberfläche liegt in der Größenordnung von 15 bis 30 m² g⁻¹.

Demgegenüber ist handelsüblicher Quarzsand kristallin und weist vergleichsweise große Teilchen und eine vergleichsweise kleine spezifische Oberfläche auf. Er dient erfindungsgemäß als inerter Zuschlagsstoff.

Flugaschen entstehen u.a. beim Verbrennen von Kohle in Kraftwerken. Flugasche der Klasse C enthält gemäß WO 08/012438 ca. 10 Gew.-% CaO, während Flugaschen der Klasse F weniger als 8 Gew.-%, vorzugsweise weniger als 4 Gew.-% und typischerweise ca. 2 Gew.-% CaO enthalten. Der CaO-Gehalt von Flugasche der Klasse C kann in Einzelfällen bis 25 Gew.-% betragen.

Metakaolin entsteht bei der Dehydrierung von Kaolin. Während Kaolin bei 100 bis 200 °C physikalisch gebundenes Wasser abgibt, findet bei 500 bis 800 °C eine Dehydroxylierung unter Zusammenbruch der Gitterstruktur und Bildung von Metakaolin (Al₂Si₂O₇) statt. Reines Metakaolin enthält demgemäß ca. 54 Gew.-% SiO₂ und ca. 46 Gew.-% Al₂O₃.

Das Alkalisilikat ist zweckmäßig aus Verbindungen mit der empirischen Formel m SiO₂. n M₂O ausgewählt, wobei M für Li, Na, K und NH₄ sowie Mischungen davon steht, vorzugsweise für Na und K.

Das molare Verhältnis m:n beträgt zweckmäßig von 0,5 bis 4,0, vorzugsweise von 0,7 bis 3,8, besonders bevorzugt von 0,9 bis 3,7 und insbesondere von 1,6 bis 3,2.

Bei dem Alkalisilikat handelt es sich bevorzugt um ein Wasserglas, besonders bevorzugt um ein Wasserglaspulver und insbesondere um ein Natrium- oder Kaliumwasserglas. Es können aber auch Lithium- oder Ammoniumwassergläser sowie Mischungen der genannten Wassergläser eingesetzt werden.

Das oben angegebene Verhältnis von m:n (auch Modul genannt) sollte vorzugsweise nicht überschritten werden, da ansonsten keine vollständige Reaktion der Komponenten mehr zu erwarten ist. Es können auch geringere Module wie z.B. ca. 0,2 zur Anwendung kommen. Wassergläser mit höheren Modulen sollten vor der Anwendung mit einem geeigneten wässrigen Alkalihydroxid auf Module im erfindungsgemäßen Bereich eingestellt werden.

Kaliumwassergläser sind vornehmlich als wässrige Lösungen im Handel, da sie stark hygroskopisch sind, Natriumwassergläser sind im zweckmäßigen Modulbereich kommerziell auch als Feststoffe erhältlich. Die Feststoffgehalte der wässrigen Wasserglaslösungen liegen in der Regel bei 20 Gew.-% bis 60 Gew.-%, vorzugsweise 30 bis 50 Gew.-%. Man bevorzugt insbesondere Kaliumwassergläser, da sie weniger zu Ausblühungen neigen als Natriumwassergläser.

Wassergläser können industriell durch Schmelzen von Quarzsand mit den entsprechenden Alkalicarbonaten hergestellt werden. Sie können aber auch unschwer aus Mischungen reaktiver Kieselsäuren mit den entsprechenden wässrigen Alkalihydroxiden bzw. Alkalicarbonaten gewonnen werden. Es ist daher erfindungsgemäß möglich, zumindest einen Teil des Alkalisilikats durch eine Mischung aus einer reaktiven Kieselsäure und dem entsprechenden Alkalihydroxid bzw. Alkalicarbonat zu ersetzen.

Die zum Abbinden erforderliche Wassermenge beträgt im Allgemeinen 15 bis 60 Gew.-%, vorzugsweise etwa 25 bis 50 Gew.-%. Diese Angaben verstehen sich zusätzlich zum Gesamtgewicht des wasserfreien Bindemittelsystems, das insoweit als 100 Gew.-% gerechnet wird.

Das hydraulische, latent hydraulische und/oder puzzolanische Bindemittel sowie das Alkalisilikat können im erfindungsgemäßen Bindemittelsystem zusammen als eine Komponente vorliegen. Diese Ausführungsform wird erfindungsgemäß bevorzugt. Die Einkomponentenformulierung wird im Bedarfsfall mit Wasser angerührt.

Das hydraulische, latent hydraulische und/oder puzzolanische Bindemittel kann im erfindungsgemäßen Bindemittelsystem aber auch als eine erste Komponente vorliegen. In diesem Falle liegt das Alkalisilikat zusammen mit mindestens der zum Abbinden erforderlichen Wassermenge als eine zweite Komponente vor, die im Bedarfsfall zum Anrühren der ersten Komponente verwendet wird.

Im erfindungsgemäßen Bindemittel können inerte Füllstoffe und/oder weitere Additive anwesend sein. Diese optionalen Komponenten können alternativ auch erst bei der Zubereitung eines Mörtels, Betons etc. zugegeben werden.

Als inerte Füllstoffe kommen allgemein bekannte Kiese, Sande und/oder Mehle in Frage, beispielsweise auf der Basis von Quarz, Kalkstein, Schwerspat oder Ton, insbesondere Quarzsand. Auch Leichtfüllstoffe wie Perlite, Kieselgur (Diatomeenerde), Blähglimmer (Vermiculit) und Schaumsand können verwendet werden.

Als Additive kommen beispielsweise an sich bekannte Fließmittel (wie z.B. Polycarboxylatether), Entschäumer, Wasserretentionsmittel, Verflüssiger, Pigmente, Fasern, Dispersionspulver, Netzmittel, Verzögerer, Beschleuniger, Komplexbildner, wässrige Dispersionen und Rheologiemodifizierer in Betracht.

Das Bindemittelsystem kann erfindungsgemäß als oder als ein Bestandteil von Baustoffrezepturen und/oder zur Herstellung von Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Estrichen, Spachtel- und Verlaufsmassen, Fliesenklebern, Putzen, Kleb- und Dichtstoffen, Beschichtungs- und Anstrichsystemen, insbesondere für Tunnel, Abwasserkanäle, Spritzschutz und Kondensatleitungen, Trockenmörteln, Fugenmörteln, Drainagemörteln und/oder Reparaturmörteln verwendet werden.

Ein weiterer Gegenstand ist das erfindungsgemäß erhältliche, hydrophile Baustofferzeugnis.

Die vorliegende Erfindung wird nun anhand der nachfolgenden Beispiele unter Bezugnahme auf die beigefügten Zeichnungen näher erläutert. In den Zeichnungen zeigt:
- Fig. 1:: das dynamische Verhalten eines Öltropfens bei der Kontaktwinkelmessung incl. Auswertung der Tropfenformen.
- Fig. 2:: eine graphische Darstellung dynamischer Kontaktwinkelmessungen verschiedener Proben.

### Beispiele

### Dynamische Kontaktwinkelmessung im System Öl/Wasser/Feststoff

Kontaktwinkel werden mit einer standardisierten Apparatur (Drop Shape Analysis Instrument Kruss DSA 10 der Fa. Kruss) gemessen. Dazu wird der Schatten eines (Öl-) Tropfens mit einer Videokamera aufgenommen und mittels computerisierter Bildanalyse ausgewertet.

Hierzu werden zunächst 2,0 µl Öl (z.B. Maschinenöl (bevorzugt), Sonnenblumenöl, Parafinöl, etc.) auf ein trockenes Substrat aufgesetzt, welches bei 23 °C und 50 % relativer Luftfeuchtigkeit äquilibriert wurde. Danach wird das Substrat mit dem Öltropfen auf den Boden einer optischen Küvette gelegt und die Küvette wird in das Kontaktwinkelmessgerät eingebracht. Das optische System wird auf ein scharfes Bild des Öltropfens justiert. Danach wird die Küvette mittels eines weiten Röhrchens innerhalb von 2 bis 3 Sekunden mit Wasser gefüllt. Gleichzeitig wird die Videoaufnahme begonnen und das optische System erneut scharf gestellt, da das Wasser im Strahlengang den Brennpunkt verändert. Während dieser Zeitspanne von bis zu 10 Sekunden besteht eine Unsicherheit hinsichtlich der Zeitskala der dynamischen Messungen. Das dynamische Verhalten während dieser Zeitspanne wird nicht zur Beurteilung des endgültigen Kontaktwinkels herangezogen.

Das Video wird aufgenommen, bis sich der Öltropfen ablöst oder mehr als 30 Sekunden lang keine wesentliche Änderung des Kontaktwinkels mehr beobachtet wird.

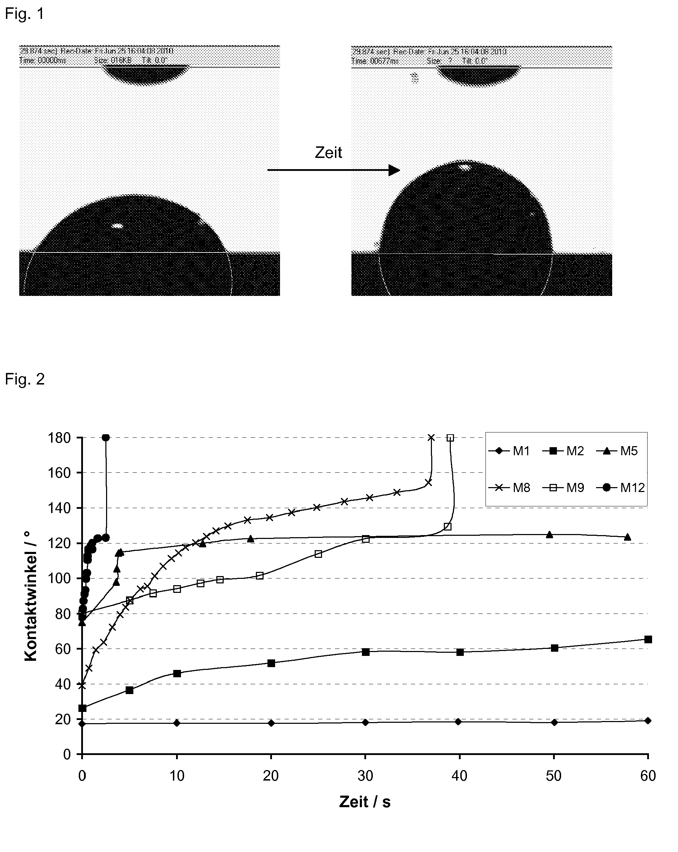

Nach Beendigung der Messung wird die Kontur des Öltropfens auf einzelnen Videobildern mittels der vom Hersteller des Messgeräts zur Verfügung gestellten Software "DSA" zur digitalen Bildanalyse ausgewertet. Für eine zuverlässige Auswertung der der Tropfenform und damit des Kontaktwinkels muss eine geeignete Anpassungsmethode in Übereinstimmung mit der Tropfenform gewählt werden. Über einen weiten Bereich von Kontaktwinkeln hat sich eine elliptische oder kreisförmige Anpassung inklusive Auswertung der Tangenten als geeignet erwiesen (vgl. Fig. 1). In Falle sehr dynamischer Systeme, in denen sich die Öltröpfchen schnell ablösen, können zwischenzeitlich auftretende Tropfenformen nicht immer im Hinblick auf klassische Tropfenformen ausgewertet werden. Dies führt zu einer gewissen Unsicherheit des durch Anpassung ermittelten Kontaktwinkels von maximal 10°, typischerweise von etwa 5°. Bei dynamischen Messkurven können diese Effekte als plötzliche kleine Sprünge des Kontaktwinkels auftauchen. Eine Ablösung kann hingegen leicht erkannt und ausgewertet werden - der resultierende Kontaktwinkel eines frei schwimmenden Öltröpfchens wird manuell mit 180° eingegeben. Alle Kontaktwinkel werden als Funktion der Zeit gespeichert und können für weitere Auswertungen verwendet werden.

### Rohstoffe

- Portlandzement 52,5 R mit ca. 22 Gew.-% SiO₂, 4 Gew.-% Al₂O₃, 65 Gew.-% CaO und < 1 Gew.-% Alkalimetalloxid; Blainewert > 380 m² kg⁻¹;
- Tonerdezement mit ca. 5 Gew.-% SiO₂, 51 Gew.-% Al₂O₃, 37 Gew.-% CaO und < 1 Gew.-% Alkalimetalloxid; Blainewert > 300 m² kg⁻¹;
- Polycarboxylatether Glenium^{®} 51 (BASF Construction Polymers GmbH);
- Hüttensandmehl mit ca. 34 Gew.-% SiO₂, 12 Gew.-% Al₂O₃, 43 Gew.-% CaO und < 1 Gew.-% Alkalimetalloxid; Blainewert > 380 m² kg⁻¹;
- Mikrosilika mit > 90 Gew.-% SiO₂ und jeweils < 1 Gew.-% Al₂O₃, CaO und Alkalimetalloxid; BET-Oberfläche > 15000 m² kg⁻¹;
- Steinkohleflugasche mit ca. 50 Gew.-% SiO₂, 26 Gew.-% Al₂O₃, 4 Gew.-% CaO und 5 Gew.-% Alkalimetalloxid; Blainewert > 400 m² kg⁻¹;
- Metakaolin mit ca. 56 Gew.-% SiO₂, 41 Gew.-% Al₂O₃ und jeweils < 1 Gew.-% CaO und Alkalimetalloxid; BET-Oberfläche > 10000 m² kg⁻¹;
- Quarzsand mit 0,063 mm < d < 0,40 mm;
- Kaliumhydroxidlösung (10 %-ig);
- Natriumwasserglas (Modul: 1,7; Feststoffgehalt: 40 Gew.-%);
- Kaliumwasserglas (Modul: 1,0 oder 2,0; Feststoffgehalt: 40 Gew.-%);
- Titandioxid mit mind. 99 Gew.-% TiO₂ (Sigma-Aldrich);
- Zirkoniumdioxid mit mind. 99 Gew.-% ZrO₂ (Sigma-Aldrich);
- Natriumwasserglaspulver (Modul: 1,0; Feststoffgehalt: 84 Gew.-%).

### Probenvorbereitung

Zweckmäßig werden zuerst alle pulverförmigen Stoffe homogenisiert und anschließend mit der Flüssigkomponente angemischt. Bei den Ansätzen M1, M2 und M8, wo Pulverwasserglas Verwendung findet, ist die Anmachflüssigkeit Wasser. Bei den restlichen Beispielen handelt es sich um zweikomponentige Systeme, da der Aktivator jeweils separat zugegeben wird. Das Mischen erfolgt mit einer Bohrmaschine und einem Scheibenrührer bei mittlerer Drehzahl. Die Abmischungen werden zunächst ca. eine Minute gerührt, bis eine homogene Masse entsteht. Nach drei Minuten Reifezeit werden die Mörtel nochmals aufgerührt und auf einer angefeuchteten Betonplattenoberfläche in einer Stärke von etwa 3 bis 5 mm appliziert. Nach Lagerung der beschichteten Platten (7 Tage bei 23 °C und 50% rel. L.F.) werden Verschmutzungstests mit Wachsmalkreide, Rotwein, Motorenöl und Kaugummi durchgeführt. Die genannten Testmedien werden auf den Mörteln M1 bis M12 auftragen und die beschichteten Betonplatten eine Stunde unter Wasser gelagert. Nach dem Herausnehmen aus dem Wasserbad, wird die Oberfläche der Beschichtung von überschüssigem Wasser befreit und der Verschmutzungsrückstand beurteilt. In einem zweiten Schritt können verbleibende Flecken noch mit einer Handbürste nachgereinigt werden.

Die Beurteilung der Testmedienentfernung erfolgt in fünf Stufen:
+ + leicht entfernbar
+ entfernbar
o in Teilen entfernbar
- kaum entfernbar
- - nicht entfernbar.

Aufgrund der Praxisrelevanz wurden alle Bindemittelzusammensetzungen mit Quarzsand abgemischt. Die in den Tabellen 1 b, 2b und 3b dargestellten Oxidzusammensetzungen beziehen nur sich auf die wasserfreien Bindemittel. Das heißt, dass sowohl der Quarzsand als auch das Wasser nicht in die Berechnungen eingehen.

### Beispiel 1

Im Beispiel 1 werden zunächst zwei Referenzsysteme hinsichtlich ihrer Reinigbarkeit untersucht. Während M1 ein herkömmlicher Portlandzementmörtel ist, handelt es sich bei der Versuchsrezeptur M2 um einen reinen Tonerdezementmörtel. Tabelle 1a gibt die Versuchsrezepturen, Tabelle 1 b die Oxidzusammensetzungen und Tabelle 1 c die Beurteilung der Reinigbarkeit wieder.

**Tabelle 1a: Versuchsrezepturen, Angaben in Gramm (g)**

| Rohstoffe | M1 | M2 |
|---|---|---|
| Portlandzement 52,5 R | 300 | |
| Tonerdezement | | 300 |
| Quarzsand | 700 | 700 |
| Polycarboxylatether | 3 | |
| Wasser | 135 | 150 |

**Tabelle 1 b: Oxidzusammensetzungen der wasserfreien Bindemittel (Gew.-%)**

| Oxide | M1 | M2 |
|---|---|---|
| SiO₂ | 23 | 5 |
| Al₂O₃ | 4 | 52 |
| CaO | 67 | 37 |
| K₂O | 1 | < 0,5 |
| Na₂O | < 0,5 | < 0,5 |
| TiO₂ | < 0,5 | 2 |
| ZrO₂ | < 0,5 | < 0,5 |

**Tabelle 1c: Beurteilung der Reinigbarkeit**

| Verschmutzungsmedium | M1 | M2 |
|---|---|---|
| Wachsmalkreide | - | - |
| Rotwein | - | o |
| Motorenöl | - | - |
| Kaugummi | - | o |

Bei beiden Mörteln ist erkennbar, dass die Medien nur teilweise und oftmals gar nicht zu entfernen sind. Der Öltropfen bildet einen dunklen Fleck, während sich der Kaugummi fest mit der zementären Oberfläche verbindet und nicht restlos entfernen lässt.

### Beispiel 2

In Beispiel 2 werden verschiedene Mischungen von aluminium- und siliziumoxidhaltigen Verbindungen hinsichtlich ihrer Reinigbarkeit untersucht. Tabelle 2a gibt die Versuchsrezepturen, Tabelle 2b die Oxidzusammensetzungen und Tabelle 2c die Beurteilung der Reinigbarkeit wieder.

**Tabelle 2a: Versuchsrezepturen, Angaben in Gramm (g)**

| Rohstoffe | M3 | M4 | M5 | M6 | M7 |
|---|---|---|---|---|---|
| Hüttensandmehl | | 200 | 200 | 150 | 200 |
| Mikrosilika | | 100 | | 150 | |
| Steinkohleflugasche | | | 100 | | 100 |
| Metakaolin | 200 | | | | |
| Quarzsand | 800 | 700 | 700 | 700 | 700 |
| Kaliumhydroxidlösung (10 %-ig) | | | | 200 | |
| Natriumwasserglas (Modul 1,7; Feststoffgehalt 40%) | | | | | 200 |
| Kaliumwasserglas (Modul 1,0; Feststoffgehalt 40%) | 350 | 200 | 200 | | |

**Tabelle 2b: Oxidzusammensetzungen der wasserfreien Bindemittel (Gew.-%)**

| Oxide | M3 | M4 | M5 | M6 | M7 |
|---|---|---|---|---|---|
| SiO₂ | 49 | 52 | 41 | 63 | 46 |
| Al₂O₃ | 24 | 6 | 13 | 5 | 13 |
| CaO | 1 | 23 | 24 | 20 | 24 |
| K₂O | 26 | 14 | 15 | 7 | 1 |
| Na₂O | < 0,5 | < 0,5 | < 0,5 | < 0,5 | 8 |
| TiO₂ | 1 | 1 | 1 | 1 | 1 |
| ZrO₂ | < 0,5 | < 0,5 | < 0,5 | < 0,5 | < 0,5 |

**Tabelle 2c: Beurteilung der Reinigbarkeit**

| Verschmutzungsmedium | M3 | M4 | M5 | M6 | M7 |
|---|---|---|---|---|---|
| Wachsmalkreide | + | + + | + | o | + |
| Rotwein | o | + | + | + | + + |
| Motorenöl | + + | + | + | + | + |
| Kaugummi | + | + + | + | + + | + + |

Die Versuchsrezepturen M3 bis M7 zeigen gegenüber den Rezepturen M1 und M2 eine deutlich bessere Reinigbarkeit. Der Motoröltropfen zeigt z.B. nahezu keine Affinität zur anorganischen Matrix und steigt bei der Unterwasserlagerung bereits nach wenigen Sekunden an die Wasseroberfläche. Je nach Bindemittelabmischung variieren die Oberflächen geringfügig hinsichtlich ihrer Reinigbarkeit.

### Beispiel 3

In Beispiel 3 werden weitere Mischungen von aluminium- und siliziumoxidhaltigen Verbindungen hinsichtlich ihrer Reinigbarkeit untersucht. Tabelle 3a gibt die Versuchsrezepturen, Tabelle 3b die Oxidzusammensetzungen und Tabelle 3c die Beurteilung der Reinigbarkeit wieder. Diese Beispiele zeigen unter anderem den Einfluss von TiO₂, ZrO₂ und Portlandzement sowie Wasserglas mit hohem Modul (2,0) hinsichtlich der Reinigbarkeit. Zudem ist eine Formulierung mit Natriumwasserglaspulver angeführt.

**Tabelle 3a: Versuchsrezepturen, Angaben in Gramm (g)**

| Rohstoffe | M8 | M9 | M10 | M11 | M12 |
|---|---|---|---|---|---|
| Hüttensandmehl | 200 | 200 | 200 | 160 | 200 |
| Portlandzement 52,5 R | | | | 40 | |
| Steinkohleflugasche | | 60 | 60 | | 100 |
| Mikrosilika | 100 | | | 100 | |
| Titandioxid | | 40 | | | |
| Zirkoniumdioxid | | | 40 | | |
| Quarzsand | 700 | 700 | 700 | 700 | 700 |
| Natriumwasserglaspulver | 80 | | | | |
| (Modul 1,0; Feststoffgehalt 84%) | | | | | |
| Kaliumwasserglas (Modul 1,0; Feststoffgehalt 40%) | | 250 | 250 | 200 | |
| Kaliumwasserglas (Modul 2,0; Feststoffgehalt 40%) | | | | | 250 |
| Wasser | 120 | | | | |

**Tabelle 3b: Oxidzusammensetzungen der wasserfreien Bindemittel (Gew.-%)**

| Oxide | M8 | M9 | M10 | M11 | M12 |
|---|---|---|---|---|---|
| SiO₂ | 55 | 35 | 35 | 51 | 45 |
| Al₂O₃ | 6 | 10 | 10 | 5 | 13 |
| CaO | 24 | 22 | 22 | 25 | 23 |
| K₂O | 1 | 17 | 17 | 14 | 13 |
| Na₂O | 10 | < 0,5 | < 0,5 | < 0,5 | < 0,5 |
| TiO₂ | 1 | 11 | 1 | < 0,5 | 1 |
| ZrO₂ | < 0,5 | < 0,5 | 10 | < 0,5 | < 0,5 |

**Tabelle 3c: Beurteilung der Reinigbarkeit**

| Verschmutzungsmedium | M8 | M9 | M10 | M11 | M12 |
|---|---|---|---|---|---|
| Wachsmalkreide | ○ | + | ○ | + | ○ |
| Rotwein | + + | + | + | ○ | + + |
| Motorenöl | + + | + + | + + | - | + + |
| Kaugummi | + | + + | + + | + | + + |

Sowohl die Verwendung von Natriumwasserglaspulver (M8) als auch von Titandioxid und Zirkoniumdioxid (M9 und M10) in den Formulierungen führen zu geringeren Verschmutzungen. Durch teilweise Substitution von Hüttensandmehl in M4 ergibt sich die Mischung M11. Diese fällt zwar gegenüber M4 ab, zeigt jedoch immer noch eine geringere Anschmutzneigung als die beiden zementären Formulierungen M1 und M2. Das hohe Wasserglasmodul in M12 führt zu einer verbesserten Entfernbarkeit des Rotweins, Motorenöls und Kaugummis.

### Beispiel 4

Die Formulierungen M1, M2, M5, M8, M9 sowie M12 wurden zudem mit der oben beschriebenen dynamischen Kontaktwinkelmessung charakterisiert. Die Messwerte sind in Fig. 2 wiedergegeben. Dabei ist zu erkennen, dass bei den beiden Referenzsystemen M1 und M2 nach einer Messdauer von 60 Sekunden ein auf die Oberfläche aufgesetzter Öltropfen einen Kontaktwinkel von ca. 20° beziehungsweise ca. 60° aufweist. Bei der erfindungsgemäßen Mischung M5 kann nach 60 Sekunden Messzeit ein Kontaktwinkel von ca. 125° beobachtet werden. Bei den Formulierungen M8, M9 und M12 löst sich der Öltropfen bereits innerhalb der ersten Minute von der Oberfläche, was einem maximalen Kontaktwinkel von 180° entspricht.

## Patentansprüche

1. Verwendung eines Bindemittelsystems, umfassend aluminium- und siliziumoxidhaltige Verbindungen, zur Herstellung eines hydrophilen Baustofferzeugnisses, **dadurch gekennzeichnet, dass** die Summe der als Al₂O₃ und SiO₂ berechneten Oxide im Bindemittelsystem ≥ 40 Gew.-%, bezogen auf das wasserfreie Bindemittelsystem, beträgt und der Kontaktwinkel eines auf die Oberfläche des ausgehärteten Baustofferzeugnisses aufgesetzten Öltropfens ≥ 90° beträgt, wobei die Kontaktwinkelbestimmung unter Wasser erfolgt.

2. Verwendung nach Anspruch 1, **dadurch gekennzeichnet, dass** die Summe der als Al₂O₃ und SiO₂ berechneten Oxide im Bindemittelsystem ≥ 50 Gew.-%, vorzugsweise ≥ 60 Gew.-%, bezogen auf das wasserfreie Bindemittelsystem, beträgt.

3. Verwendung nach Anspruch 1 oder 2, **dadurch gekennzeichnet, dass** der Kontaktwinkel ≥ 100°, vorzugsweise ≥ 120° und insbesondere ≥ 135°, beträgt.

4. Verwendung nach einem der Ansprüche 1 bis 3, **dadurch gekennzeichnet, dass** der Gehalt der als SiO₂ berechneten Oxide im Bindemittelsystem ≥ 15 Gew.-%, vorzugsweise ≥ 25 Gew.-% und insbesondere ≥ 35 Gew.-%, bezogen auf das wasserfreie Bindemittelsystem, beträgt.

5. Verwendung nach einem der Ansprüche 1 bis 4, **dadurch gekennzeichnet, dass** das Bindemittelsystem des Weiteren titanoxidhaltige und/oder zirkonoxidhaltige Verbindungen umfasst und die Summe der als Al₂O₃, SiO₂, TiO₂ und ZrO₂ berechneten Oxide im Bindemittelsystem ≥ 41 Gew.-%, vorzugsweise ≥ 50 Gew.-% und insbesondere ≥ 60 Gew.-%, bezogen auf das wasserfreie Bindemittelsystem, beträgt.

6. Verwendung nach einem der Ansprüche 1 bis 5, **dadurch gekennzeichnet, dass** der Gehalt der als CaO berechneten Oxide im Bindemittelsystem ≤ 35 Gew.-%, vorzugsweise ≤ 30 Gew.-%, besonders bevorzugt von 8 bis 28 Gew.-% und insbesondere von 12 bis 25 Gew.-%, bezogen auf das wasserfreie Bindemittelsystem, beträgt.

7. Verwendung nach einem der Ansprüche 1 bis 6, **dadurch gekennzeichnet, dass** das Bindemittelsystem hydraulische, latent hydraulische und/oder puzzolanische Bindemittel sowie Alkalisilikat umfasst.

8. Verwendung nach Anspruch 7, **dadurch gekennzeichnet, dass** das hydraulische Bindemittel aus Portlandzementen, Aluminatzementen sowie Mischungen davon ausgewählt ist und der Gehalt des Bindemittelsystems an Portlandzementen und/oder Aluminatzementen ≤ 30 Gew.-%, vorzugsweise ≤ 20 Gew.-% und insbesondere ≤ 10 Gew.-%, bezogen auf das wasserfreie Bindemittelsystem, beträgt.

9. Verwendung nach Anspruch 7, **dadurch gekennzeichnet, dass** das latent hydraulische Bindemittel aus industriellen und/oder synthetischen Schlacken, insbesondere aus Hochofenschlacke, Hüttensand, Hüttensandmehl, elektrothermischer Phosphorschlacke, Edelstahlschlacke sowie Mischungen davon ausgewählt ist.

10. Verwendung nach Anspruch 7, **dadurch gekennzeichnet, dass** das puzzolanische Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen sowie Mischungen davon ausgewählt ist.

11. Verwendung nach Anspruch 7, **dadurch gekennzeichnet, dass** das Alkalisilikat aus Verbindungen mit der empirischen Formel m SiO₂· n M₂O ausgewählt ist, wobei M für Li, Na, K und NH₄ sowie Mischungen davon steht, vorzugsweise für Na und K.

12. Verwendung nach Anspruch 11, **dadurch gekennzeichnet, dass** das molare Verhältnis m:n von 0,5 bis 4,0, vorzugsweise von 0,7 bis 3,8, besonders bevorzugt von 0,9 bis 3,7 und insbesondere von 1,6 bis 3,2, beträgt.

13. Verwendung nach einem der Ansprüche 1 bis 12, **dadurch gekennzeichnet, dass** zum Abbinden 15 bis 60 Gew.-%, vorzugsweise 25 bis 50 Gew.-%, Wasser erforderlich sind.

14. Verwendung nach Anspruch 13, **dadurch gekennzeichnet, dass** das hydraulische, latent hydraulische und/oder puzzolanische Bindemittel sowie das Alkalisilikat zusammen als eine Komponente vorliegen.

15. Verwendung nach Anspruch 13, **dadurch gekennzeichnet, dass** das hydraulische, latent hydraulische und/oder puzzolanische Bindemittel als eine erste Komponente und das Alkalisilikat zusammen mit mindestens der zum Abbinden erforderlichen Wassermenge als eine zweite Komponente vorliegen.

16. Verwendung nach einem der Ansprüche 1 bis 15, **dadurch gekennzeichnet, dass** zusätzlich inerte Füllstoffe und/oder weitere Additive im Bindemittelsystem anwesend sind.

17. Verwendung nach einem der Ansprüche 1 bis 16, **dadurch gekennzeichnet, dass** das Bindemittelsystem als oder als Bestandteil von Baustoffrezepturen und/oder zur Herstellung von Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Spachtel- und Verlaufsmassen, Fliesenklebern, Putzen, Kleb- und Dichtstoffen, Beschichtungs-und Anstrichsystemen, insbesondere für Tunnel, Abwasserkanäle, Spritzschutz und Kondensatleitungen, Trockenmörteln, Fugenmörteln, Drainagemörteln und/oder Reparaturmörteln verwendet wird.

18. Hydrophiles Baustofferzeugnis, erhältlich nach einem der Ansprüche 1 bis 17.
